Europäisches Patentamt

European Patent Office

Office européen des brevets

(19)

(11) Publication number : **0 470 726 A1**

# (12) EUROPEAN PATENT APPLICATION

(21) Application number : **91306718.7**

(22) Date of filing : **23.07.91**

(51) Int. Cl.⁵ : **H01M 2/34**

(30) Priority : **06.08.90 US 563140**

(43) Date of publication of application :
**12.02.92 Bulletin 92/07**

(84) Designated Contracting States :
**FR GB**

(71) Applicant : **EVEREADY BATTERY COMPANY, INC.**
**Checkerboard Square**
**St. Louis Missouri 63164 (US)**

(72) Inventor : **Tucholski, Gary Ronald**
**6317 Dellrose Drive**
**Parma Heights Ohio 44130 (US)**

(74) Representative : **Lord, Hilton David et al**
**Marks & Clerk 57-60 Lincoln's Inn Fields**
**London WC2A 3LS (GB)**

(54) **Circuit breaking switches, and cells comprising them.**

(57)    The present invention relates to electrochemical cells having a cell circuit cut-off switch comprising a deformable membrane (10) sealing off the pressure-generating components of the cell, with the membrane (10) acting on a switch member (24) to break the circuit in the cell, thereby circumventing the problems associated with pressure build-up within the cell.

EP 0 470 726 A1

The invention relates to an electrochemical cell, such as a rechargeable cell, that employs a safety disconnect device isolated from the active materials of the cell and operable to break the electrical circuit of the cell when the pressure within the cell exceeds a predetermined level.

Galvanic cells, such as alkaline cells, are generally designed to vent when the internal pressure exceeds a predetermined amount. When exposed to an abuse condition, such as being charged to an excessive degree, the cell vents, allowing gas to escape. Under certain abuse conditions, electrolyte may be forced from the cell, entrained in the gas, it being preferable to have the electrolyte escape, rather than have the cell rupture from internal pressure build-up.

Cell manufacturers have used a number of approaches to resolve the problem of expelling electrolyte during venting. One method of preventing seal rupture, owing to abuse charging or the like, is to insert a diode in the battery's electrical circuit. By eliminating the possibility of charging the cells, internal gas is not generated and the seal never ruptures.

Another electrically related mechanism is a belleville-shaped "flip switch". This device is triggered by bulging of the closed end of the cell's cylindrical container which causes the belleville member to invert, thereby breaking electrical contact.

Another method involves the use of adsorbents or electrolyte thickeners. The adsorbent materials are usually located outside the seal area and beneath the cell's cover or jacket. As electrolyte escapes from a ruptured seal, the liquid is adsorbed. Spew thickeners are mixed with the electrolyte and, therefore, are contained within the cell. The objective of the thickener is to slow down and/or adsorb any leakage that may occur.

The disadvantage of using either an adsorbent or a thickener is that both tie up space that otherwise could be used for active materials of the cell.

A third procedure is to use an outer container and end covers as an electrolyte containment system to provide space to contain any electrolyte that may escape.

US-A-3,676,221 discloses a battery comprising a plurality of stacked, disc-like, sealed cells secured together by cups fitted over one cell and having bottoms spot-welded to the next cell and side walls spot-welded to the interfitting cell. A heat-shrunk sheath encloses the battery and has caps forming the poles. Between each pair of cells is a circular disc of insulating material against which the cup bottoms bulge upon expansion of the contents of the cells, thereby breaking the welds and electrically disconnecting the cells.

US-A-4,025,696 describes a disc shaped washer which inverts after the bottom bulge exceeds a predetermined value. Prior to activation, the washer's inside diameter is slanted toward the container. As the container bulges, the bottom of the container pushes against the washer and eventually causes the washer to invert. This inversion electrically separates the bottom cover from the container. An open circuit is the net result.

US-A-3,775,661 describes a cell in which internal pressure forces a diaphragm against a switch which electrically disconnects a charging device. The diaphragm is located inside a venting device which is attached to one end of the cell.

US-A-2,651,669 describes a bulge-activated switch that can be incorporated into a single cell battery, or a multiple cell battery, and which is operable such that the bulge can be used to open a switch, or switches, that control the cell's discharging and/or charging circuits.

US-A-3,617,386 describes a cell in which a thin sheet of metal with "spring back" ability is positioned between the seal and cover of the cell so as to break the cell's electrical circuit when the bulge becomes excessive.

US-A-3,081,366 describes a sealed cell having a metallic sheet member connected to one electrode, its periphery being insulatingly affixed to an open casing end, and an overlying exposed metallic terminal being insulatingly held over the sheet member. A movable switch portion normally connects an intermediate pressure-deflectable sheet member portion to the external terminal and, in response to outward motion of the deflected sheet portion under excess internal pressure, the switch portion disconnects the external terminal from the deflected sheet portion.

US-A-3,373,057 describes a cell in which the cover of the casing of the cell is provided centrally with an inwardly concave-contact button. A dished (concave convex) snap-action spring disc, of the automatic reset type, is marginally sealed to the inside of the cover. An automatic reset disc, after snapping in one direction in response to pressure on its convex side, will return with snap action when the pressure is relieved. The disc is provided centrally with a sealed movable contact for engagement and disengagement with an internal fixed contact when the disc snaps to and fro. The arrangement is such that, when the contacts are engaged, the disc is slightly sprung toward the cover but short of causing snap action. This maintains good electrical contact pressure under safe internal gas pressures. The fixed contact is electrically connected with one set of battery plates and the other set of plates is electrically connected with the casing.

US-A-4,690,879 describes a cylindrical galvanic cell employing a unitary type cover welded to the container. This acts as a fail-safe circuit interruption means to electrically isolate one terminal of the cell from the cell's electrochemical system, when the bottom of the cylindrical cell bulges beyond a predetermined amount, the unitary cover breaking electrical contact with the housing of the cell.

US-A-4,756,983 describes a cylindrical galvanic cell employing a cover having a peripheral flange which electrically contacts the conductive container of the cell, and whereby a predetermined bulge in the bottom of the container causes the central portion of the cover to separate from the peripheral flange portion, thereby electrically isolating the central portion of the cover from the cell.

US-A-3,177,313 discloses a pressure-operated snap action switch having a member with an arched central portion which is deformed by pressure stress, and which returns to its original position when the stress is removed.

Not only alkaline cells but rechargeable cells, such as nickel-cadmium cells and metal hydride cells, can produce internal pressure build-up when the cell is overcharged, or charged at a rate other than its intended charging rate. If a rechargeable cell is charged at an excessive rate, or overcharged, pressure can increase within the cell, possibly leading to actual disassembly of the cell.

In some cell circuit interrupter devices, the device is located within the cell in proximity to, or contacting, the cell's active materials. Thus, caustic ingredients of the cell may contact the cell circuit interrupter device, thereby contaminating it and preventing it from properly functioning.

Thus, the cells of the present invention are provided with means for electrically isolating one terminal of a cell from the cell's electrical circuit when the internal pressure of the cell exceeds a predetermined level. Further, such cells may be rechargeable cells, the switch being able to isolate one terminal of the cell from the cell's electrical circuit when the internal pressure of the cell exceeds a predetermined level so that, during charging of the cell, if the internal pressure exceeds a predetermined level, the electrical circuit of the cell will be broken.

The switches of can be isolated from the active materials of the cell, and will still break the cell's electrical circuit when the internal pressure exceeds a predetermined level, and will reconnect the circuit when the internal pressure decreases below the predetermined level.

The cells and switches of the invention are easy to make, cost effective and easy to assemble.

It has now been discovered that it is possible to provide a cell circuit cut-off switch by using a deformable membrane to seal off the pressure-generating components of the cell, with the membrane acting on a switch member to break the circuit in the cell.

Thus, in a first aspect, the present invention provides an electrochemical cell having circuit-interrupting means which, on build-up of internal pressure beyond a given level, interrupts the cell's internal circuit, characterised in that the cell comprises a diaphragm serving to sealingly separate at least a portion of the active components from one terminal of the cell, a conductive member being centrally located on the diaphragm and in electrical contact both with the terminal and with the electrode therefor, and wherein the diaphragm bulges on build-up of internal pressure such that, at a predetermined level, the conductive member is sufficiently displaced to break electrical contact with the terminal.

As stated, the diaphragm serves to sealingly separate at least a portion of the active components from one terminal of the cell. Thus, any necessary contact is still made, but the active components are prevented from passing the diaphragm. Typically, the diaphragm will be at the open end of the cell, between the active components and the cover. Thus, sealing off of the active components prevents the possibility of corrosion of any part of the cell located between the diaphragm and the cover.

However, the primary purpose of the diaphragm is that, if pressure is built up by the active components, then the diaphragm will be forced to bulge. When the diaphragm bulges, the conductive member is displaced, ultimately disconnecting the terminal from its electrode

The precise nature of the diaphragm is not an essential feature of the invention, the only requirement being that it bulges when there is an internal pressure build-up. The diaphragm may be a conductive sheet, or a non-conductive sheet (wherein "sheet" means any material which is substantially flat over the majority of its surface). If it is a conductive sheet, then it may serve as a part of the connection provided by the conductive member between the electrode and the terminal. In such an instance, the sheet should be insulated from the second terminal, which is typically the cell housing. This may be achieved by fitting a non-conductive gasket in the open end of the housing, and using this to locate the conductive diaphragm. The diaphragm may be secured in the gasket by conventional means, such as adhesives, and may, in addition, be further retained by the use of a washer around the periphery, upon which may be located the cover, and the whole sealed into position by crimping of the open end of the housing.

The terms "electrical contact" and "electrically connected", and similar such terms, are used herein, unless otherwise defined, to indicate situations wherein there is an electrically conductive path between the components defined, whether the components are in direct physical contact, or are only connected via other, electrically conductive means.

The diaphragm may also be non-conductive, in which case it may be located in a similar manner to that exemplified above for a conductive diaphragm, or, for example, it may be an integral part of the non-conductive gasket. In such an embodiment, the gasket then serves three functions, namely to retain the cover, to seal the cell, and to provide the diaphragm.

Whether the diaphragm is conductive or non-conductive, it may be made of conventional materials. If the diaphragm is conductive, then such materials may include metal sheeting or metallicised plastic sheeting while, if the diaphragm is non-conductive, then it may be made of any suitable material, such as polypropylene or polyethylene.

The dimensions of the diaphragm are not essential to the invention, provided that they are such that the diaphragm can bulge at the predetermined pressure. Thus, there should be sufficient of the diaphragm free to allow such bulging. Accordingly, it is preferred that the diaphragm, in a conventional cell, extend substantially across the open end of the container. In particular, it is preferred that the diaphragm is bounded by a non-conductive gasket (either integral or non-integral with the diaphragm) serving to seal the cell. In the event where a washer, for example, is used to help to retain the diaphragm in the gasket, the internal aperture of the washer should be such as to allow bulging of the diaphragm therethrough.

It will appreciated that it is advantageous to use sheeting of a uniform thickness to form the diaphragm, in order that bulging of the diaphragm be readily predictable and reliable. However, such considerations do not limit the diaphragm, especially with regard to features which may be advantageous in other respects, such as retention of the diaphragm in the gasket. Thus, the diaphragm may be any suitable shape, preferably substantially corresponding to the cross-section of the cell. If the diaphragm is plastic, or metal sheeting, then it may be advantageous to provide a flange at the periphery of the diaphragm to assist in retaining the diaphragm.

It may also be advantageous to provide weakened, or hinging, points in the diaphragm to enable it to bulge sooner, or to a greater degree, than it would otherwise do. For example, in a circular diaphragm, or even in a square diaphragm, a circular groove or indentation in the diaphragm, about the point where the conductive member is supported, can serve to enhance the bulge.

Likewise, in supporting the conductive member, suitable modifications of the diaphragm may be made or required. For example, in the instance where the diaphragm is non-conductive, the conductive member may suitably be located such that a portion of it protrudes throegh the underside of the diaphragm. In such an instance, the diaphragm will necessarily comprise a hole through which the conductive member will pass, and the hole may suitably reinforced by a flange, or upstanding wall(s). Such a flange is advantageously integral with the diaphragm, although this is not an absolute requirement.

In the instance where the diaphragm is conductive, there is not necessarily any reason why the conductive member should protrude through the diaphragm, and the conductive member may, instead, be sealed to the surface of the diaphragm. In such an instance, it may be advantageous to provide a protrusion on the diaphragm over which the conductive member may be located. This is not a requirement, but may help to locate the conductive member during manufacture, and to stabilise the conductive member while any adhesive sets, for example.

The conductive member may take any suitable form. In general, such a form will typically comprise an upstanding portion protruding generally away from the diaphragm, and a portion adapted for securing to the diaphragm. The conductive member is also referred to herein as the "pin" or "pin member", and such references include any reference to the conductive member in general, unless otherwise specified.

The pin may be secured to the diaphragm in any suitable manner, and generally to the centre of the diaphragm, thereby making maximum use of the bulge in the diaphragm. Other locations, other than the epicentre, are possible, but less preferred. The "central portion" as used herein, means that portion which is not the edge of the diaphragm. Examples of suitable arrangements of pin and diaphragm are given above.

In addition, where the pin extends through the diaphragm, it may be flattened at one end, in the manner of a rivet, in order to prevent complete passage of the pin through the diaphragm. There may also be a ridge around the pin such that the pin can be pushed through the diaphragm and pop-fitted, so the flattened portion or flange of the pin contacts one side of the diaphragm, while the ridge contacts the other side of the diaphragm, or the upstanding walls surrounding the hole through which the pin has passed.

In the event that the pin is located on a conductive diaphragm, the pin may be located on a protrusion on the diaphragm, or on several protrusions. However, it is generally sufficient, in order for ease of manufacture, to provide one protrusion, thereby helping to locate the pin.

It is not essential that the pin be secured to the diaphragm. The only requirement is that the diaphragm serves to push the pin when on bulging, thereby causing the pin, ultimately, to break contact with the terminal. Thus, the pin should be in electrical contact with the electrode and the terminal. In general, the net result is that the pin is effectively secured to the diaphragm, even if it is only by means of biasing the diaphragm against the pin, or vice versa.

The connection between the pin and the electrode may be made in any suitable manner. Where the diaphragm itself is conductive, this may be suitably achieved by placing the diaphragm such that it is in direct contact with one of the electrodes. The conductive member is then in contact with the diaphragm, establishing electrical contact between the pin and the electrode.

In the event that the diaphragm is non-conductive, electrical contact with the electrode may be made by means of a current collector serving to establish contact with the electrode. The current collector may be part of the pin, but suitably is secured in contact with the electrode and has an arm or spring in biased contact with the pin, thereby electrically connecting the pin to the electrode. It is preferred that the current collector is biased into contact with the pin, although this is not essential, and may, instead, be by means of welding the arm, or current collector to the pin, or by locating the arm within a suitable recess in the pin, for example.

The current collector may protrude through the diaphragm, but this may create complications. What is preferred is that a portion of the pin protrudes through the diaphragm to make contact with the current collector. An alternative is to provide a centrally located conductive portion in the non-conductive diaphragm, thereby allowing the pin to contact one side of the conductive portion, and the current collector to contact the other side. Such a conductive portion may be provided, for example, by a rivet-type arrangement.

The pin forms a part of the switch arrangement, and may, in its simplest form, serve to complete the switch arrangement. In one aspect, the pin extends through the cover of the cell, the cover forming part of the terminal with which the pin makes contact. Contact with the cover may be made by having the head of the pin being larger than a neck of the pin located in proximity to the diaphragm, such that the head forms a snug fit in a hole in the cover. When the diaphragm bulges, the head is pushed through the cover, the neck being sufficiently narrow that it does not make contact with the hole in the cover, thereby breaking contact. Alternatively, the pin may be associated with a conductive flange or tab which extends from that part of the pin located externally to the cover, and which flange or tab is in contact with the cover. When the diaphragm bulges, the pin is pushed through the cover further, lifting the tab or flange, breaking contact with the cover.

In either of the above instances, it is preferable to have a biasing mechanism located between the cover and the diaphragm, acting to push the pin against the diaphragm, thereby providing stability, and ensuring that the diaphragm does not bulge excessively at unacceptably low pressures.

Such biasing means may take any suitable form, but a preferred embodiment is a Belleville-type spring or washer. Where the Belleville washer is conductive, it will be necessary to ensure that electrical contact, via the Belleville washer, is not made between the pin and the cover at the predetermined bulge pressure at which the internal electrical circuit of the cell is intended to break. To ensure this, a non-conductive surface may be placed either on the cover or on the pin at the position where the Belleville washer is in contact. While such insulation may be located on the cover, it is preferable to locate the insulation on the pin, as this may take the form of, for example, a plastic collar.

An alternative, and preferred, switch arrangement is not reliant directly on the type of switch defined above (hereinafter referred to as a simple pin-type switch). In this alternative aspect, there is further provided a conductive member biased into contact with the pin and with the terminal, or with a surface electrically connected to the terminal, and a non-conductive fulcrum being positioned such that, when the pin urges the biased member towards the terminal or surface, the member is forced to pivot about the fulcrum, thereby breaking electrical contact between the pin and the terminal. References herein to "terminal" or "surface" include a reference to the other term, unless otherwise specified.

The biased member may suitably be a Belleville spring or washer, as above. It is not necessary that the bias be provided by the nature of the member itself. Such bias may be provided by a combination of factors, such as location of the pin with respect to the member, provided that, when the cell is in the resting state, the biased member contacts both the pin and the terminal or surface connected to the terminal, and that pressure on the pin causes the biased member to pivot about the fulcrum.

It is not necessary that the biased member be a Belleville washer. Another embodiment includes the situation where several arms protrude from the pin into contact with the terminal, suitably the cover of the cell, and where, when pressure is exerted on the pin, the arms pivot about a suitably placed fulcrum or fulcra. The arms may be part of the pin, but may, more suitably, be located on a collar about the pin. The arms may be integral with the collar if desired.

The biased member may be, as described above, a collection of biased elements, such as arms. It is necessary that the biased member be electrically conductive, but this may be achieved in any suitable manner. A metallicised plastic Belleville switch may be suitable, although it is generally preferred that the member is entirely of resilient metal.

The fulcrum may comprise any suitable material, and may, for example, be plastic, or metal with a non-conductive coating. In general, the fulcrum will be secured to the surface against which the biased member acts, and may be in contact with the biased member even at resting. The only requirement is that the biased member be in contact with the terminal at resting and be separated from contact by acting on the fulcrum at the predetermined internal pressure.

The fulcrum may take the form of a plastic collar, for example, located on the inside of the cover so that the pin can pass into the collar, but requiring that, when the pin passes into the collar, the biased member acts against the walls of the collar, thereby breaking contact with the cover.

It will be appreciated that it is not necessary that the pin takes any physical configuration, other than to provide a surface against which the biased member can act, and which will push the biased member when the diaphragm bulges. Thus, at its simplest, the pin may simply be a conductive portion of the diaphragm, but it is preferred that it actually takes a form upon which the biased member can actually be supported, such as a central pin-shaped projection about which a collar or washer, for example, can be placed. This prevents movement of the biased member either during assembly or if the battery is dropped, for example.

In an alternative embodiment, the fulcrum may simply take the form of a raised projection from the cover, the projection being non-conductive. This could take the form of a plastic washer smaller in diameter than the Belleville washer. At rest, the Belleville washer extends over the plastic washer and on to the cover but, when pressure is exerted, the Belleville washer is flattened, and the plastic washer then acts as a fulcrum to prevent contact between the Belleville washer and the cover.

It will be appreciated that, depending on the design, a reversible, or irreversible, switch may be provided. If the pin extends through the cover, and is forced through the cover sufficiently far, the Belleville washer may flip completely, thereby effectively preventing reestablishment of electrical contact between the terminal and the electrode when the internal pressure of the cell reduces. However, in general, electrical contact will be reestablished once the internal pressure reduces, with the biased member reassuming its resting position.

In a preferred embodiment, there is provided a cell of the invention with a switch comprising both a biased member and the simple pin-type switch described above.

The invention relates to an electrochemical cell comprising an electrode assembly containing a first electrode of one polarity and a second electrode of an opposite polarity; a housing containing the electrode assembly; a first terminal electrically connected to the first electrode and a second terminal electrically insulated from the first terminal; switch means within the housing comprising a spring member biassed to electrically contact the second terminal and positioned adjacent to a non-conductive fulcrum member secured to the housing and said fulcrum member having a segment disposed and positioned with respect to the spring member so that said spring member can pivot on said segment when said spring member is exposed to an internal applied force, and a moveable conductive member which electrically connects the second electrode to said spring member and when the internal pressure in the cell exceeds a first predetermined level the moveable conductive member moves to exert force against the spring member which then pivots on the segment of the non-conductive fulcrum member and breaks the electrical connection between the spring member and the second terminal.

Thus, in one embodiment, the present invention provides an electrochemical cell, such as a rechargeable cell, employing switch means comprising a spring member biassed to electrically connect one of the cell's terminals to one of the cell's electrodes and wherein a pressure responsive moveable member is designed to pivot the spring member on a fulcrum member to break the electrical connection between the electrode and the terminal when the pressure within the cell exceeds a predetermined level and wherein said spring member is isolated from the active components of the cell.

In one embodiment, the spring member retains the break in the electrical connection to the second terminal after the internal pressure exceeds a first predetermined level and then decreases below a second predetermined level.

In another embodiment, the spring member retains the break in the electrical connection to the second terminal after the internal pressure exceeds a first predetermined level and then makes the electrical connection to the second terminal when the internal pressure decreases below a second predetermined level.

In general, it is preferred that the spring member is physically isolated from the electrode assembly in the container by a member placed between the spring member and the electrode assembly. Further, the housing will usually comprise a container having an open end closed by a cover and wherein the switch means is positioned proximate the cover.

Preferably, the spring member directly contacts the cover of the cell and the cover is a conductive cover and is the second terminal of the cell.

In a preferred embodiment, the non-conductive fulcrum member is disposed between the spring member and the cover and positioned so that the spring member will pivot on the segment of the non-conductive fulcrum when the moveable member moves in response to the internal pressure exceeding a predetermined level.

Preferably, the container is a cylindrical container and the moveable member moves axially within the container when the internal pressure exceeds the predetermined level.

Preferred cells of the invention are those wherein the electrode assembly is a metal hydride electrode assembly. A generaly convenient predetermined pressure level is about 30 psi (207 kPa) and above.

An alternative cell of the invention is wherein the electrode assembly is a nickel cadmium electrode assembly, or wherein the electrode assembly is an alkaline electrode assembly.

The first electrode may be the positive electrode, or the second electrode may be the positive electrode.

In a preferred embodiment, the housing comprises a conductive container having an open end closed by a conductive cover which is electrically insulated from the container, the,conductive container is the first terminal and the conductive cover is the second terminal of the cell.

Preferably, the switch means is resettable so that, once the internal pressure decreases below a predetermined value, the moveable member will be forced back to its original position by the spring member, once more electrically connecting the spring member to the second terminal. Thus, the spring member is preferably biassed so that, in the normal state or steady state embodiment, the spring member electrically connects an electrode of the cell to the appropriate terminal. The moveable member should be positioned in the cell to react to any pressure build-up so that, if the pressure build-up exceeds a predetermined amount, the moveable member causes the spring to deflect or pivot on a selected area of the fulcrum member, whereon the switch member breaks the electrical contact between the terminal and the electrode in the cell. While the pressure build-up lasts, the electrical circuit will remain broken.

Preferably, when the internal pressure decreases below a predetermined level, the spring member reverts back, and assumes its normal or original position, forcing the moveable member back into its original position.

The first predetermined level of internal pressure required to break contact in the switch may be equal, or different, to the second predetermined level of pressure required to reconnect the electrical connection within the switch.

Although it is preferable that the switch member be resettable, in some applications the switch member could be adjusted so that, once it is deflected, it will not return to its initial position, so the electrical circuit of the cell remains broken.

A preferred embodiment employs a belleville-type spring which, in the normal position, electrically connects an electrode of the cell to its appropriate terminal. The belleville spring may be positioned adjacent an insulator member that acts as a fulcrum for the spring member. Thus, when the spring member is pushed or acted upon, it will deflect or pivot on the fulcrum member, breaking the electrical contact between electrode and terminal. Preferably, when the force acting on the spring member reduces, the spring member will deflect on the fulcrum and revert back to its initial or original position, when it will reestablish the connection.

The switch means is preferably assembled within the cell so that it is isolated from the active components of the cell and, thus, insulated from any corrosive elements of the electrochemical cell system, such as any caustic ingredients that may be present in the cell. Isolation of the switch means may be accomplished by positioning the switch means proximate one end of the housing, preferably the cover for the housing, and components of the cell and the spring member. This member may comprise the pusher member positioned between the active components of the cell and the spring member.

Preferably, in alkaline cells, the first terminal is electrically connected to the positive electrode, and the second terminal generally electrically connected to the negative electrode. Thus, in nickel cadmium cells, the first terminal is electrically connected to the positive electrode and the second terminal connected to the negative electrode. The switch means should preferably be positioned proximate the housing cover, so that it can be isolated from the active components of the cell.

The switch means of this invention is particularly suited for rechargeable cells, such as nickel cadmium cells, metal hydrides cells, lithium-$MnO_2$ cells and the like. As stated above, when charging a cell employing the switch means of this invention, if the internal pressure of the cell exceeds a predetermined level, the electrical circuit will be broken so that the charge will be stopped until the internal pressure decreases to below a predetermined level. This prevents the cell from receiving a flow of electrical current when the pressure within the cell is above a predetermined value. Generally, for most rechargeable cells, a suitable internal pressure at which the spring means responds is in excess of about 30 psi (207 kPa), more preferably 50 psi (345 kPa).

The switch means of the present invention is also suitable for other cell systems, such as alkaline cells employing an $MnO_2$ positive electrode, a zinc negative electrode and an electrolyte solution comprising potassium hydroxide. For such a cell, the predetermined pressure should be below the crimp release pressure for the cell.

The present invention will now be further illustrated with respect to the accomapnying drawings, in which:

Figure 1 is a cross-sectional, elevational view of part of a cell showing the switch means of the present invention in the first position;

Figure 2 is a cross-sectional elevational view of the cell of Figure 1 showing the switch means in the second position;

Figure 3 is a cross-sectional elevational view of part of a cell showing another embodiment of the switch means of the present invention in the first position; and

Figure 4 is a cross-sectional elevational view of the cell of Figure 3 showing the switch means in the second position.

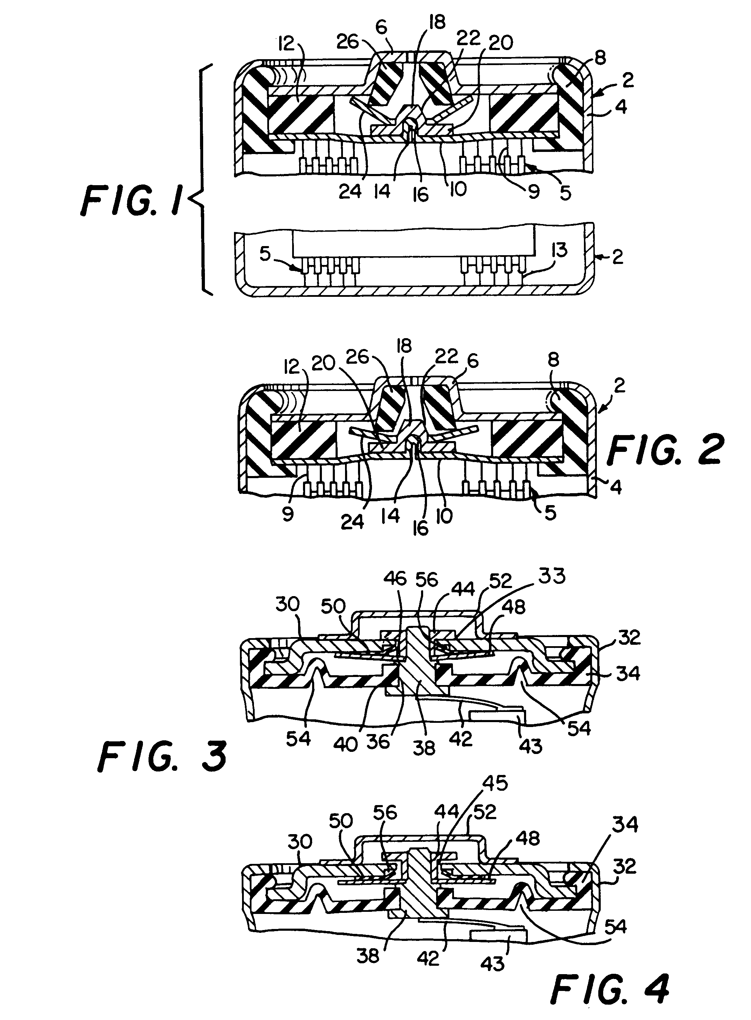

Referring to Figure 1, a part of a cell 2 is shown which comprises a container 4 housing the electrode assembly 5 and closed at the opening by a conductive cover 6 that is electrically insulated from the container 4. Cover 6 is secured using a non-conductive gasket 8 and then sealing the cell using conventional closing techniques. In addition to cover 6, a conductive diaphragm 10, such as a metallic diaphragm, and an insulator washer 12, are clamped between the folded over ends of gasket 8.

At the centre of diaphragm 10 is a projected segment 14 which is used to accommodate opening 16 of conductor pusher member 18. Conductive member 18 comprises a cylindrical base 20 with a vertical projected central portion 22. A conductive belleville spring 24 is positioned over central portion 22 of member 18 and extended to contact cover 6. Disposed above belleville spring 24, and secured to the undersurface of cover 6, is an insulator fulcrum member 26 which acts as a fulcrum for spring 24.

Although not shown, the conductive diaphragm 10 can be electrically connected to an electrode within the cell using conventional means such as conductive tabs, wires or the like. In some cell constructions, such as the coiled rolled electrode assembly 5 shown in Figure 1, an electrode 9 may be in direct contact with conductive diaphragm 10. Preferably, direct contact is made at the periphery of the conductive diaphragm. The connection of the opposite polarity electrode of the electrode assembly 5 with the container 2 may be made using conventional means such as conductive tabs, wires or the like to adapt the container as a terminal for the cell. In the Figures, the opposite polarity electrode 13 makes direct contact with the container 2 without any need for an additional component.

In Figure 1, the conductive diaphragm 10, which is electrically connected to electrode 9 in the cell, is also electrically connected to pusher member 18 which is electrically connected to conductive spring 24 which, in turn, is electrically connected to conductive cover 6, thereby adapting cover 6 as a terminal for electrode 9 of the cell. Under normal pressure conditions in the cell, the electrical circuit of the cell is complete, and the cell can deliver, or receive, a current flow. However, if the pressure within the cell exceeds a predetermined value, it will exert force against diaphragm 10 which, in turn, will axially move member 18 upward against spring 24. If the predetermined internal pressure is exceeded, belleville spring 24 will deflect about fulcrum insulator member 26 as shown in Figure 2. This causes the end of belleville spring 24 to deflect downward, thereby breaking electrical contact with conductive cover 6.

Thus, in this embodiment of the invention, the electrical circuit of the cell will be broken when the internal pressure within the cell exceeds a predetermined value. Once the internal pressure decreases, the belleville spring 24 may be made to snap back to its original position and once again make electrical contact with cover 6. As shown in Figures 1 and 2, conductive diaphragm 10 isolates pusher member 18, belleville spring 24 and fulcrum insulator 26 from the active components of the cell, which are housed below diaphragm 10 in container 2.

Figure 3 shows another embodiment of the invention in which a cell cover 30 is secured at the open end of cell container 32 by a seal member 34. Seal member 34 is a non-conducting member having an opening 36 at its centre for accommodating a pusher pin member 38. Preferably, pusher pin member 38 is secured to the under surface seguent 40 of seal member 34 using a conventional sealant, such as polyamide or asphalt.

Attached to the bottom of pusher pin member 38 is a conductive tab 42 which is used to make electrical contact with one of the electrodes 43 of the cell. As stated above, with reference to Figures 1 and 2, the opposite polarity electrode of the cell may be electrically connected to container 32 using conventional conductive means, such as tabs or wires, or the opposite polarity electrode may make direct contact with the container 32.

As shown in Figure 3, pusher pin member 38 projects through cover 30 at the centre. Bushing 44 is located over pin member 38, and may be conductive or non-conductive. Bushing 44 may be made from a conductive material in order to provide for a low resistance contact with cover 30 at interface 33. If bushing 44 is conductive, then clearance is needed between bushing wall 45 and the interior wall defining the central opening in cover 30. This clearance is required in order to ensure free movement of bushing 44 through the central opening in cover 30 and to prevent undesirable electrical flow between the bushing 44 and the cover 30.

Pusher pin member 38 has a ridge 46 on which is positioned a conductive belleville spring 48. Thus, the inner segment of conductive belleville spring 48 rests on ridge 46 of pusher pin member 38 and is secured in place by the lower end face of bushing 44.

In the normal position, belleville spring 48 extends to electrically contact cover 30. Disposed between spring 48 and the underside of cover 30 at the inner portion of spring 48 is a non-conductive member 50 which acts as an insulating fulcrum for spring 48. Secured to cover 30 is a hat-shaped conductive terminal 52.

In Figure 3, an electrical path from electrode 43 within the cell is made through conductive tab 42, conductive pin member 38, conductive spring 48, conductive cover 30 and conductive terminal 52. Thus, in the assembly shown in Figure 3, an electrical circuit is made from electrode 43 in the cell to the outer terminal 52 on cover 30 thereby permitting current to flow into or out of the cell. Seal 34 is shown with an inverted "V" shape disturbance 54 which need not be inverted, as desired. This disturbance 54 functions as a hinge which minimises axial movement of the seal's central segment during the cell closing operation.

The embodiment of Figure 3 is constructed so that, when the internal pressure within the cell exceeds a predetermined level, it will force pin member 38 axially upward, while seal 34 deflects upward about its hinge 54, as shown in Figure 4. The upward axial movement of pin member 38, in response to internal pressure, deflects spring 48 about insulating fulcrum 50 so that the outer edge of spring 48 deflects away from, and breaks contact with, cover 30. A recess 56 is disposed at the undersurface of cover 30, at its central area, to accommodate the deflection of the inner portion of conductive spring 48. This effectively breaks the electrical contact of the electrode 43 to terminal 52 of the cell and prevents the flow of current into and out of the cell. As shown in Figures 3 and 4, seal 34 and pin member 38 effectively isolate the spring 48 and insulating fulcrum 50 from the active components of the cell, which are housed below the seal 34 in container 32.

## Claims

1. An electrochemical cell having circuit-interrupting means which, on build-up of internal pressure beyond a given level, interrupts the cell's internal circuit, characterised in that the cell comprises a diaphragm serving to sealingly separate at least a portion of the active components from one terminal of the cell, a conductive member being centrally located on the diaphragm and in electrical contact both with the terminal and with the electrode therefor, and wherein the diaphragm bulges on build-up of internal pressure such that, at a predetermined level, the conductive member is sufficiently displaced to break electrical contact with the terminal.

2. A cell according to claim 1, wherein the diaphragm is at the open end of the cell, between the active components and the cover.

3. A cell according to claim 1 or 2, wherein the diaphragm comprises a conductive sheet, or a nonconductive sheet.

4. A cell according to any preceding claim, wherein the diaphragm is bounded by a non-conductive gasket which serves to seal the cell.

5. A cell according to any preceding claim, wherein weakened, or hinging, points are provided in the diaphragm.

6. A cell according to any preceding claim, wherein the conductive member extends through the cover of the cell, and wherein the cover forms part of the terminal with which the conductive member makes contact, preferably wherein the head of the conductive member is larger than a neck of the conductive member located in proximity to the diaphragm, such that the head forms a snug fit in a hole in the cover or wherein the conductive member is associated with a conductive flange or tab which extends from that part of the conductive member located externally to the cover, and which flange or tab is in contact with the cover.

7. A cell according to claim 6, wherein there is provided a biasing mechanism located between the cover and the diaphragm, acting to push the conductive member against the diaphragm.

8. A cell according to any preceding claim, wherein there is further provided a second conductive member biased into contact with the first conductive member and with the terminal, or with a surface electrically connected to the terminal, a non-conductive fulcrum being positioned such that, when the conductive member urges the biased member towards the terminal or surface, the biased member is forced to pivot about the fulcrum, thereby breaking electrical contact between the conductive member and the terminal.

9. A cell according to claim 8, wherein the biased member is a Belleville spring or washer, or comprises a plurality of arms protruding from the conductive member into contact with the terminal, suitably the cover of the cell, and where, when pressure is exerted on the conductive member, the arms pivot about a suitably placed fulcrum or fulcra.

10. A cell according to claim 8 or 9, wherein the fulcrum is a plastic washer smaller in diameter than the diameter of the biased member.

11. A cell according to any of claims 8 to 10, further as dependent on claim 6.

12. A cell according to any preceding claim, wherein the biased member retains the break in the electrical connection to the second terminal after the internal pressure exceeds a first predetermined level and then decreases below a second predetermined level.

13. A cell according to any preceding claim, wherein the biased member retains the break in the electrical connection to the second terminal after the internal pressure exceeds a first predetermined level and remakes the electrical connection to the second terminal when the internal pressure decreases below a second predetermined level.

**14.** A cell according to any preceding claim, wherein the predetermined pressure level is about 30 psi (207 kPa), more preferably 50 psi (345 kPa), and above.

**15.** A cell according to any preceding claim, wherein An electrochemical cell comprising an electrode assembly containing a first electrode of one polarity and a second electrode of an opposite polarity; a housing containing the electrode assembly; a first terminal electrically connected to the first electrode and a second terminal electrically insulated from the first terminal; switch means within the housing comprising a biased member biassed to electrically contact the second terminal and positioned adjacent to a non-conductive fulcrum member secured to the housing and having a segment disposed and positioned with respect to the biased member so that said biased member can pivot on said segment when said biased member is exposed to an internal applied force, and a moveable conductive member which electrically connects the second electrode to said biased member, and wherein when the internal pressure in the cell exceeds a predetermined level the moveable conductive member exerts a force against the biased member to pivot the biased member on the segment of the non-conductive fulcrum member and thereby break the electrical connection between the biased member and the second terminal,

A cell according to any preceding claim, wherein said cell optionally further comprising any one or more suitable features as defined in any preceding claim, in any suitable combination.

FIG. 1

FIG. 2

FIG. 3

FIG. 4

European Patent
Office

**EUROPEAN SEARCH REPORT**

Application Number

EP 91 30 6718

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-3 081 366 (L. BELOVE)<br>* Column 6, line 50 - column 8, line 6 * | 1-4,13 | H 01 M 2/34 |
| X | EP-A-0 327 366 (BRITISH EVER READY LTD)<br>* Abstract; column 3, line 64 - column 7, line 21; claims * | 1-3,5 | |
| D,X | US-A-3 617 386 (R.J. BOSBEN)<br>* Whole document * | 1-3,5 | |
| A | | 9 | |
| D,A | US-A-3 373 057 (TEXAS INSTRUMENTS INC.)<br>* Whole document * | 1 | |
| D,A | US-A-3 177 313 (BOLESLAW KLIMAK)<br>* Whole document * | 8,9 | |
| A | US-A-4 035 552 (J. EPSTEIN)<br>* Column 3, line 32 - column 4, line 42 * | 1-3 | TECHNICAL FIELDS SEARCHED (Int. Cl.5)<br><br>H 01 M |

The present search report has been drawn up for all claims

| Place of search | Date of completion of the search | Examiner |
|---|---|---|
| THE HAGUE | 06-11-1991 | DE VOS L.A.R. |

EPO FORM 1503 03.82 (P0401)